# EUROPEAN PATENT SPECIFICATION

(11) **EP 1 237 711 B1**
(45) Date of publication and mention of the grant of the patent: **23.03.2005**
(21) Application number: 00989982.4
(22) Date of filing: 13.12.2000
(51) Int. Cl.: B29C 70/88, B29C 70/26

(54) **A REINFORCING STRUCTURE FOR COMPOSITE ARTICLES**
STÜTZSTRUKTUR FÜR VERBUNDBAUTEILE
STRUCTURE DE RENFORT POUR ARTICLES COMPOSITES

(30) Priority: 15.12.1999 EP 99204340; 15.12.1999 EP 99204338; 15.12.1999 EP 99204339
(43) Date of publication of application: 11.09.2002
(73) Proprietor: N.V. BEKAERT S.A., 8550 Zwevegem (BE)
(72) Inventor: BOESMAN, Peter, B-9820 Merelbeke (BE); DE CLERCQ, Elsie, B-9620 Zottegem (BE); VAN GIEL, Frans, B-8500 Kortrijk (BE)
(86) International application number: PCT/EP2000/012781
(87) International publication number: WO 2001/043952

(56) References cited:
- EP-A- 0 109 505
- EP-A- 0 335 588
- EP-A- 0 546 962
- GB-A- 1 174 292
- US-A- 3 979 536
- US-A- 4 345 626
- US-A- 5 236 529
- US-A- 5 998 028

## Description

### Field of the invention.

The invention relates to a reinforcing structure, comprising metallic elements, and the use of such reinforcing structure to reinforce stiff composite articles. The invention further relates to stiff composite articles and a method to provide stiff composite articles.

### Background of the invention.

Reinforcing structure are known to reinforce polymer articles. Often, glass fibers or C-fibers are used to reinforce polymer matrices, providing together a reinforced, eventually shaped article. During forming processes, the bending properties of the polymer matrix are influenced negatively, since the reinforcing structures are difficult to elongate.

Often, metallic filaments or fibers are integrated into composite materials in order to obtain a material that is EMI shielded. As a result of electromagnetic requirements, metallic filaments or fibers with fine diameters of 100 µm or less are used. An example of this can be found in US5089326. It is known in the art that the addition of fine metallic fibers or filaments, usually less than 100µm, does not increase the strength of the composite material.

Metal wires or metal wire textile fabrics are also known as reinforcing structures, e.g. from EP-A-0109505, FR1290278, EP234463A1, EP546962A1 or EP392904A1. To improve the deformability of the composite material, metal wires are preferably provided as knitted fabrics.

In figure 4 of EP-A-0109505, essentially parallel metal wires, a knitted metal wire cloth. These metal wires all have only one structural deformation , due to their presence in this knitted metal wire cloth.

### Summary of the invention.

The present invention relates to a reinforcing structure comprising metallic elements. The reinforcing structure can be used to manufacture stiff composite articles, which further comprises a polymer matrix.

It is an object of the present invention to provide a reinforcing structure which comprises metallic elements, all metallic elements laying essentially parallel to each other, which has improved bending properties compared to the known wires or wire meshes, and which provide an alternative to the knitted wire structures.

A reinforcing structure as subject of the invention comprises metallic elements, which are all essentially parallel to each other in the reinforcing structure, each of the metallic elements is structurally deformed. With "essentially parallel" is meant that due to the nature of the metallic elements, the distance between adjacent metallic elements may vary only slightly.

In the scope of the present invention, metallic elements are to be understood as metallic wires, e.g. drawn metallic wires, a bundle of metallic wires, metallic strands or cords.

As subject of the invention, the bending properties of reinforcing structure are improved by integrating metallic elements in the reinforcing structure, which have an elongation at rupture of more than 3% compared to initial length. This elongation can even be more than 5% or more than 7%, e.g. more than 10% and most preferentially more than 15% at rupture.

According to the invention, this elongation is obtained by the use of a metallic element having structural deformations. Such structural deformation may have an irregular shape, undulated with a wavelength and/or amplitude, which varies over the length to the metallic element. Preferably however, the metallic element are undulated in a regular way, with constant parameters over the whole length of the metallic element.

The structural deformations are undulations. The metallic element, being a wire, strand or cord, is given a form, being wavelength and an amplitude. This undulated metallic element is essentially comprehended in one plane, parallel to the axis of the metallic element.

In case the metallic element is undulated, this undulation being the structural deformation, the removal of the structural deformation of the metallic element will lead to an elastic elongation, a plastic elongation, or a combination of both of the metallic element during the forming process, mainly depending on the wavelength of the undulation.

In case a small wavelength is used, e.g. less than 3mm, a higher force will be necessary to elongate the metallic element, so removing the structural deformation, next to the elastic and plastic elongation of the metallic element under load as if there was no structural deformation. The removing of this structural deformation leads to a mainly plastic elongation of the metallic element. When the metallic element is released, the metallic element will not come back to its original undulated form, but will stay elongated to certain extend.

In case a longer wavelength is applied, e.g. more than 3mm or even more than 4.5mm, a lower force is sufficient to stretch the metallic element, so removing to some extend the structural deformation. This leads to a mainly elastic elongation of the metallic element, which is additional to the elastic elongation of the metallic element under low force as if there was no structural deformation. When the metallic element is released, the metallic element will come back to approximately its original undulated form. When higher forces are applied, a plastic elongation of the metallic element itself is found, next to the removal of the remaining structural deformation.

The elongation of the metallic elements being undulated with a large wavelength, can be more than 0.3%, e.g. more than 0.4%, or even more than 0.5%, preferably more than 1% or more, applying a force of 10% of the force at rupture of the metallic element.

One understands that the elongation due to a removing of the structural deformation, can be either elastic, or plastic or a combination of a plastic and an elastic elongation, depending on the wavelength or the length to make a 360° revolution applied.

Metallic elements, being part of a reinforcing structure as subject of the invention, may have more than one structural deformation, being undulations superposed one to another.

When a metallic element having two structural deformations, being two undulations of which one has a large wavelength and the second having a short wavelength, is subjected to an elongation force F, a stress-strain curve comprising different successive zones, limited by forces F1, F2, F3 and F4 (F1<F2<F3<F4), is obtained.

For a force F applied less than F1, an elastic elongation is obtained. When a force F larger than F1, but less than F2 is applied, an additional, essentially plastic elongation is added. These elongations can be explained by the mainly removing of the structural deformation with large wavelength.

When the force F is increased to a level between F2 and F3, the additional elongation again is mainly elastic. When F is increased to a level between F3 and F4, the elongation in this zone becomes mainly plastic, until rupture occurs at F4. These two later elongations are mainly explained by the removal of the structural deformation with short wavelength, and the plastic deformation of the metallic element without structural deformation until rupture.

The forces F1, F2 and F3, where the elongation change from elastic to plastic or vice versa, can be adjusted by the wavelength and amplitude of the undulations together with other parameters of the metallic element, such as diameter of wires, alloy and drawing history and eventually strand and cord construction.

In case more than 2 structural deformations are superposed to each other, a similar behavior of the metallic element under load can be obtained.

In case the structural deformations are undulations, the metallic element may either be undulated in one plane parallel to the axis of the metallic element, or the undulations may be provided in different planes, all parallel to the axis of the metallic element.

The same characteristics for metallic elements are found in case one or more structural deformations are spiral shaped structural deformations.

The reinforcing structure may comprise one or more layers, hereafter called reinforcing layers. According to the present invention, the metallic elements are present in at least one of the reinforcing layers, all metallic elements of this reinforcing layer are running essentially parallel to each other. In case the reinforcing structure comprises more than one reinforcing layer, of which at least two reinforcing layers comprise metallic elements, the direction of the metallic elements of one layer may be different of the direction of the other layer.

The reinforcing structure is to be understood as all elements, which are used to provide the stiff composite article, next to the polymer matrix. A person skilled in the art understands that also other materials can be used to provide elements of the reinforcing structure, e.g. glass fiber, C-fiber or mats or woven fabrics out of such materials, in addition to the metallic elements.

An object of the invention is to improve the bending properties and behavior of reinforcing structures comprising metallic elements during a forming process of a stiff composite article, comprising this reinforcing structure and a polymer matrix. During this process, the reinforcing structure and the polymer matrix are subjected to heat and / or pressure in order to obtain a stiff composite article. The forming can be done in one step or may require subsequent steps.

It was found that when a reinforcing structure comprising metallic elements, having a structural deformation, is subjected to a forming process, the force needed to form the stiff composite article is partially used to elongate the metallic element. The force applied will elongate the metallic element by partially removing the structural deformations. This is obtainable because of the elongation at rupture of the metallic elements as indicated above.

A reinforcing structure as subject of the invention may be subjected to a forming process, together with the polymer matrix. This process comprises a heating action to soften the polymer matrix, a forming action to form the softened matrix and the reinforcing structure in a desired form, and a cooling action to stiffen the matrix again.

When a metallic element having more than one structural deformation is used as a part of the reinforcing structure of a stiff composite article, benefits are provided to the bending properties during the forming process on the one hand and to the stiff composite article on the other hand. In case the force F, used to provide a stiff composite article comprising the reinforcing structure is approximately F2, the bending properties of the reinforcing structure are improved by the elastic and plastic elongation provided by the elongation zones below F2. However, when the stiff composite article is subjected to an impact force, e.g. a force between F2 and F3, the stiff composite article will be able to absorb the impact energy in a reversible change of its shape. This because mainly the reinforcing structure will stretched under an essentially elastic elongation.

Such forming processes, in which the reinforcing structure and the polymer matrix are subjected to heat and/or pressure in order to form a stiff composite article, may comprise one or subsequent steps.

First, polymer material, to be used as polymer matrix in the stiff composite article, is added to the reinforcing structure. E.g. several essentially parallel metallic elements are laminated between two or more polymer layers. Eventually, other elements of the reinforcing structure are added before or during laminating. An alternative is to extrude polymer material around the reinforcing structure, comprising the metallic elements, which are essentially parallel to each other. This combination of polymer material and reinforcing structure comprising metallic elements is subjected to a forming process.
Such a forming process could be e.g. press-forming, flow moulding, thermofolding or membrane forming.
In a press-forming operation (stamping), a reinforcing structure and the polymer matrix are heated to processing temperature and stamped to shape in a two-part-tool under pressure to provide a stiff composite article.
In a flow moulding operation, the reinforcing structure and the polymer matrix are placed in a two-part-tool and heated to the melting temperature of the polymer material. Eventually pressure is used. The mould cavity is filled by polymer matrix, flowing into every recess of the mould, so providing a stiff composite article.
In a thermoforming operation the reinforcing structure and the polymer matrix are heated locally and formed to provide a stiff composite article.
In a membrane forming operation an autoclave pressure is used to drape the preheated reinforcing structure and the polymer matrix over a tool, providing a stiff composite article.

Further, the presence of metallic elements in the matrix during bending operations improves the heat distribution throughout the whole matrix. Since the metallic elements have a high thermal and electric conductivity. This leads to shorter cycle times compared to composite materials with other reinforcing structures, not comprising metallic elements such as glass fibers or carbon fibers.

It is also obvious that, when metallic elements are used in only one direction of the reinforcing structure, the structural deformations of the metallic elements will lead to an improvement of the bending properties of the reinforcing structure only in the direction parallel to the axis of the metallic element.

In case metallic elements are used in more than one direction each direction present in a different reinforcing layer of the reinforcing structure, the structural deformation of the metallic elements will lead to an improvement of the bending properties in all directions parallel to an axis of a metallic element.

The metallic elements can be woven or braided together with polymer filaments, yams or polymer tapes into one and the same fabric. The metallic elements run in only one direction of the fabric, either the warp or weft direction. This fabric itself forms part of the reinforcing structure. It provides an alternative way to introduce the metallic elements into the polymer matrix. Polymer material, to be used as the polymer matrix of the stiff composite material itself, is added, e.g. extruded on one or on both sides of the fabric. Alternatively, the fabric may be laminated with one or more layers of polymer material. When such a combination of a fabric comprising metallic elements and polymer material is subjected to a forming process, in order to obtain a stiff composite article, the polymer filaments or yams help to fill the spaces between the adjacent metallic elements. Especially when the filaments or yams are of the same polymer nature as compared to the polymer matrix.

Another alternative is provided by providing a polymer coating around the metallic elements, preferably before they are given the structural deformation. E.g. polymer material is extruded around the metallic element. Such polymer coating helps to improve the adhesion between the metallic elements of the reinforcing structure and the polymer matrix.

Any thermoplastic material can be used as a polymer matrix. A thermoplastic material has to be considered as any thermoplast and any thermoplastic elastomer.
Examples of suitable thermoplastic materials are : polyethylene (PE), polypropylene (PP), polystyrene (PS), polyethylene terephthalate (PET), polyethylene napthalate (PEN), polybuteen terephthalate (PBT) polyvinylchloride (PVC), polyamide (PA) , polyester (PES), polyimide (PI), polycarbonate (PC) , styrene acrilonitryl (SAN), acrylonitril-butadiene-styrene (ABS), thermoplastic polyurethane (TPU), thermoplastic polyolefins (TPO), thermoplastic copolyetheresters , copolymers of these polymers or similar materials.
These polymer matrices could be defined by a Young's modulus of more than 10⁷Pa, preferably between 10⁸Pa and 5*10⁹Pa. The Young's modulus is measured at the origin of the stress-strain curve of the polymer at ambient temperatures.

A similar stiff composite article can be obtained by using thermoset polymers by forming the reinforcing structure without polymer matrix, and adding the thermoset matrix, being the polymer matrix, to the formed reinforcing structure by e.g. injection molding.

In case metallic elements, being strands or cords, are used in the reinforcing structure, either as such or integrated into a woven or braided fabric together with polymer filaments, yams or tapes, preference is to be given to those strands or cords, which have a large and rough surface so as to increase the mechanical anchoring in the matrix. Examples are 3x3 and 7x3 cords, preferred to single stranded cords.

To improve the corrosion resistance of the metallic elements, the metallic elements can be coated with a metallic coating layer such as zinc or a zinc alloy such as brass. A suitable zinc alloy is an alloy comprising 2 to 10 % Al and 0.1 to 0.4 % of a rare earth element such as La and/or Ce.

In order to assure a good adhesion between the metallic and the thermoplastic material, an adhesion promoter can be applied on the metallic element.
Possible adhesion promoters are bifunctional coupling agents such as silane compounds. One functional group of these coupling agents is responsible for the binding with the metal or metal oxides; the other functional group reacts with the polymer.
More details about these coupling agents can be found in the PCT application WO-A-99/20682.
Other suitable adhesion promoters are aluminates, zirconates or titanates.

Wires used as metallic elements as such or comprised in a strand or cord may have various cross-sections and geometries, e.g. circular, oval or flat.
Within the range of wires, strands and cords, a large variety of materials can be used, dependent on the required mechanical strength. Wires used as such or comprised in a strand or cord, can have a diameter of 0.04mm to 1.0 mm, preferably between 0.1 mm and 0.4mm, e.g. 0.15mm, 0.175mm or 0.3mm.

Wires having structural deformations, may also be used to provide a strand or cord. These strands or cords may form part of the reinforcing structure.

Any metal can be used to provide the metallic elements. Preferably alloys such as high carbon steel alloys or stainless steel alloys are used.

When steel wire is used, the tensile strength of the steel wires ranges from 1500 N/mm² to 3000 N/mm² and even more, and is mainly dependent upon the composition of the steel and the diameter.

Also other parameters of a strand or cord, such as the construction of the strand or cord, the number of wires and the diameters of each wire comprised in a strand or cord, the force at rupture of each wire comprised in the strand or cord, can be chosen to provide the required mechanical properties such as strength and elongation at rupture.

### Brief description of the drawings.

The invention will now be described into more detail with reference to the accompanying drawings wherein
- FIGURE 1A and B shows a schematic view of a stiff planar composite structure as subject of the invention.
- FIGURE 2 shows a side view of an undulated wire.
- FIGURE 3 shows stress strain curves of undulated wires.
- FIGURE 4 shows a metallic element, having two undulations superposed to each other.
- FIGURE 5 shows a stress-strain curve of an undulated wire as shown in FIGURE 4.
- FIGURE 6, 7 and 8 shows a schematic view of another stiff planar composite structure as subject of the invention.
- FIGURE 9 shows a reinforcing structure comprising a textile woven fabric.

### Description of the preferred embodiments of the invention.

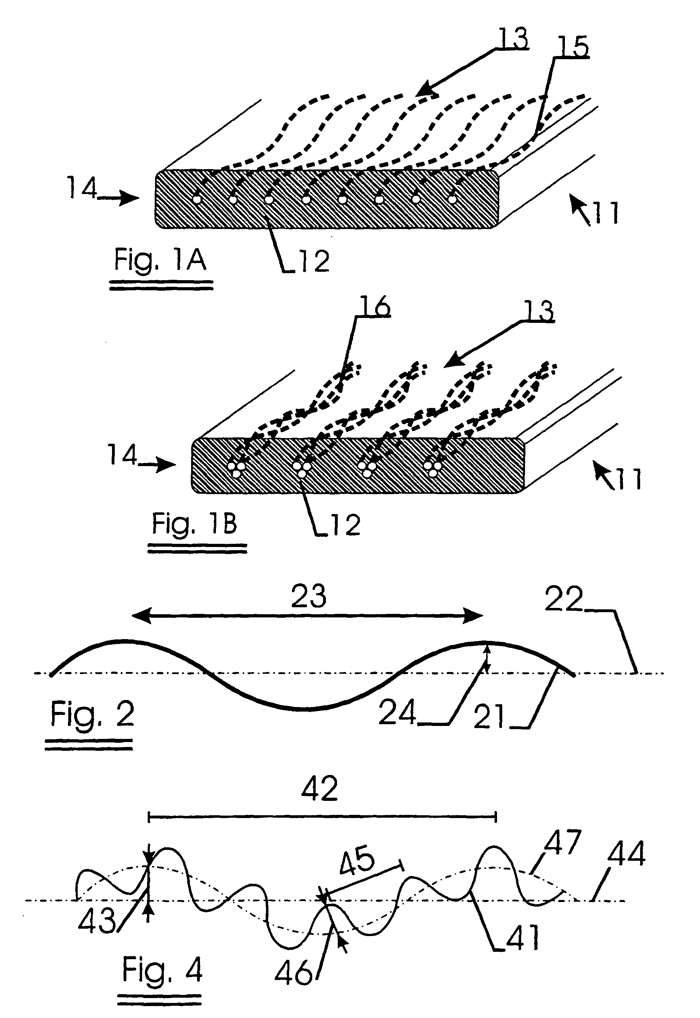

An embodiment of a stiff planar composite material is shown in FIGURE 1A and 1B. The stiff planar composite material 11 comprises a polymer matrix 12, e.g. a PES matrix, and a reinforcing structure 13, comprising only one reinforcing layer 14. In this embodiments the reinforcing layer 14 consists of a number of undulated wires 15, laying essentially parallel to each other in one reinforcing layer (as shown in FIGURE 1A) or a number of undulated wires 16, laying essentially parallel to each other in one reinforcing layer (as shown in FIGURE 1B).

FIGURE 2 shows a side view of an undulated wire 21. The wire has its original axis 22, to which it is undulated in one plane with a wavelength 23 and amplitude 24. For this embodiment, a wire diameter of 0.3mm is chosen.

Different embodiments of an undulated wire were provided, having characteristics as shown in the table underneath.

| Sample | Wire diameter | Wavelength | amplitude |
|---|---|---|---|
| Sample A | 0.3mm | 6.199mm | 0.867mm |
| Sample B | 0.3mm | 5.579mm | 0.964mm |
| Sample C | 0.3mm | 2.988mm | 0.696mm |
| Sample D | 0.3mm | 0mm | 0mm |

All other characteristics are identical for the four samples. Sample A, B and C were provided using the wire of sample D.

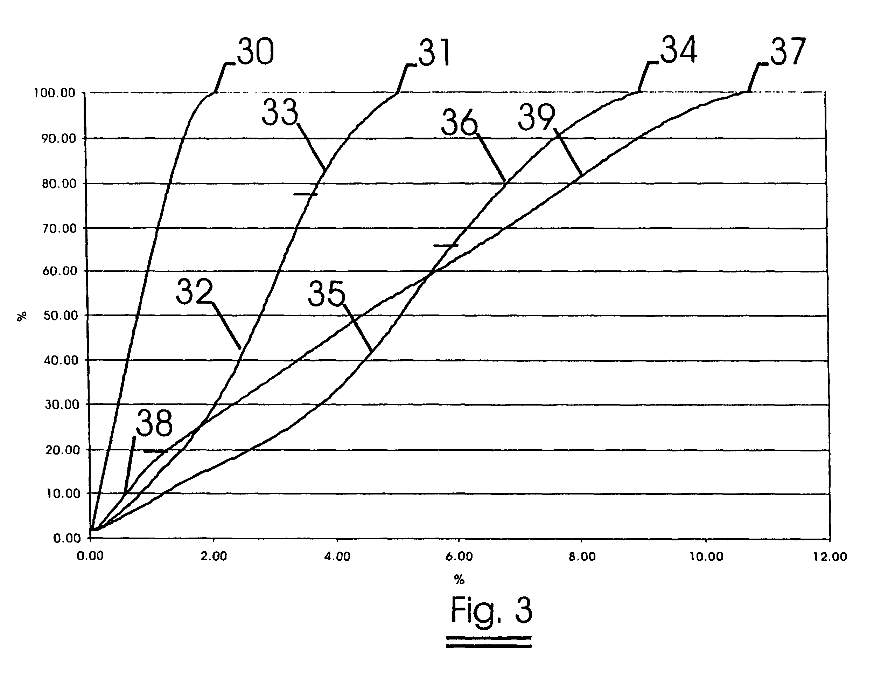

FIGURE 3 shows the stress strain curves of sample A, B, C and D. In abscissa, the elongation compared to the length at start is shown. The ordinate shows the force applied compared to the total force at rupture.

Compared to the curve 30 of the not structural deformed wire of sample D, it is clear that by introducing a structural deformation, a significant larger elongation is obtainable. Since this structural deformation is the only difference between the four samples, the different elongation has to be caused by the structural deformation.

For sample A, the stress strain curve 31 shows that the major part of the elongation is found in the essentially elastic deformation zone 32 of the curve, whereas only a smaller part of the elongation is found in the plastic deformation zone 33.

Same observation can be made for the stress-strain curve 34 of sample B. A major part of the elongation is found in the elastic deformation zone 35, compared to the elongation provided by the plastic deformation zone 36. Both samples have a rather large wavelength and it was found that the removal of the structural deformation was obtained by an essentially elastic elongation.

For sample C, the stress-strain curve 37 shows that only a small elastic elongation can be found in the elastic deformation zone 38, compared to the large elongation in the plastic deformation zone 39. The removing of the structural deformation for these rather short wavelengths is essentially obtained by a plastic elongation.

Elongation more than 4%, e.g. 5%, 9% or even 11 % are obtained. At 10% of the force at rupture, already a large elongation is found for metallic element with structural deformation compared to the elongation at 10% of force at rupture of a not structural deformed wire. This elongation at low forces is improved using large wavelengths.

Other embodiments can be obtained by applying different undulated wires such as wires with other diameter, alloy, wavelength, amplitude or undulation forms. Even cords and strands, being undulated, e.g. parallel to the strand or cord axis are to be understood in the scope of the invention.

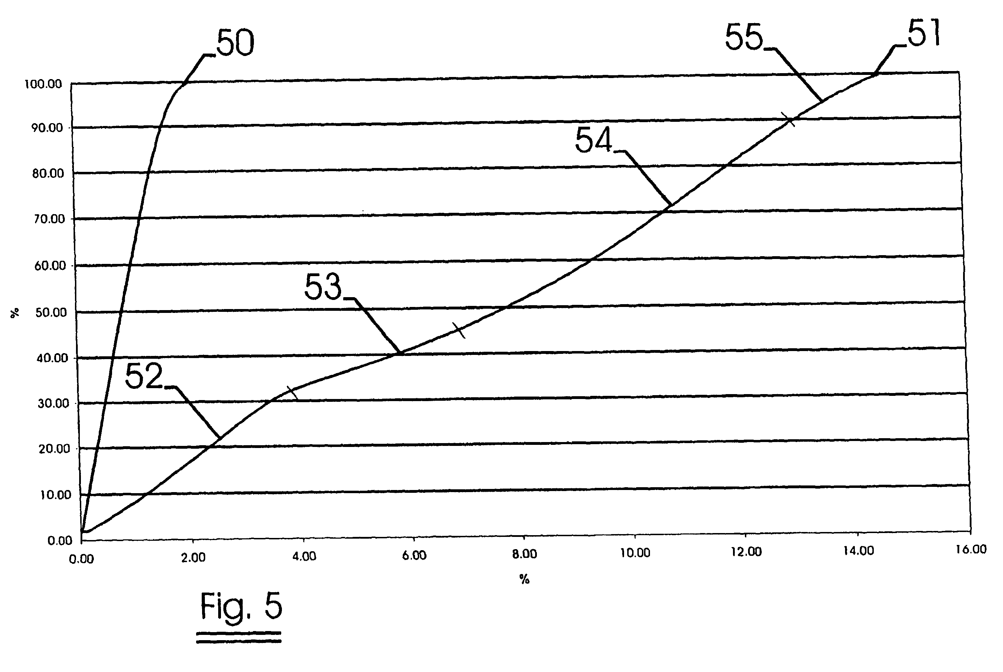

Another embodiment is obtainable using metallic element with more than one structural deformation superposed to each other. In FIGURE 4 a wire 41 is shown, having 2 undulations superposed to each other. The two undulations are provided in the same plane.

A first undulation, characterized with a large wavelength 42 and amplitude 43, compared to the axis 44 of the wire as if there was no such undulation, is superposed to an undulation with short wavelength 45 and amplitude 46 compared to the axis 47 of the wire as if there was no such undulation.

An embodiment was provided with characteristics as in the table underneath :

| Sample | Wire diameter | Wavelength 42 | Amplitude 43 | Wavelength 45 | Amplitude 46 |
|---|---|---|---|---|---|
| Sample E | 0.3mm | 5.034mm | 1.124mm | 2.988mm | 0.696mm |

FIGURE 5 shows the stress strain curves of sample E. In abscissa, the elongation compared to the length at start is shown. The ordinate shows the force applied compared to the total force at rupture.

Compared to the curve 50 of the not structural deformed wire of sample D, it is clear that by introducing structural deformations, a significant larger elongation is obtainable. Since this structural deformation is the only difference between sample E and the reference wire sample D, the different elongation has to be caused by the structural deformation.

For sample E, curve 51 shows 4 zones. In zone 52, the elongation obtained is essentially elastic. Zone 53 provided an additional elongation which is mainly plastic, whereas zone 54 provides an elongation which is again more elastic. Zone 55 provides a plastic elongation until rupture occurs.

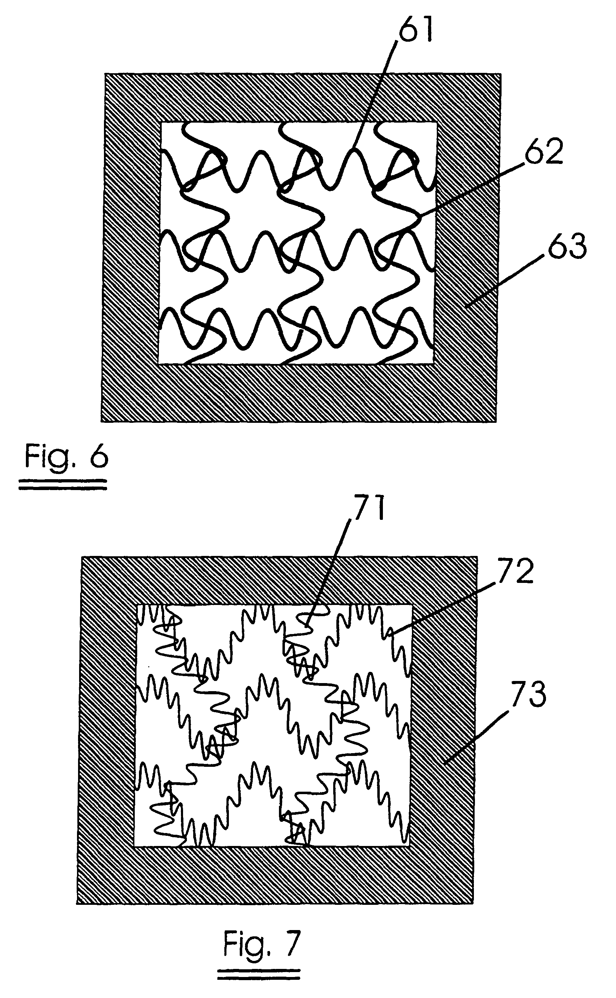

A reinforcing structure having 2 reinforcing layers is shown in FIGURE 6. In the first reinforcing layer, undulated wires 61 are laying essentially parallel to each other in one direction. In the second reinforcing layer undulated wires 62 are laying essentially parallel to each other in a direction, which is different from the direction of the wires 61 of the first reinforcing layer.
A stiff composite article may be obtained when a polymer matrix 63 is provided to the reinforcing structure, e.g. by laminating polymer sheets under increased temperature to both sides of the reinforcing structure.

By applying heat and/or pressure, the polymer matrix 63 adheres to the reinforcing structure. Possibly, the stiff composite article is given its final form at the same time. Alternatively, a planar stiff composite article is provided, which may be deformed to a final shape later in a separate operation applying heat and/or pressure to the planar stiff composite article.

Another reinforcing structure is shown in FIGURE 7. Wires 71 and 72, each having two undulations superposed to each other, are arranged in two reinforcing layers. In each reinforcing layer, the wires 71, respectively 72 are laying essentially parallel to each other. The directions of wires 71 and 72 may be different. A polymer matrix 73 is additionally provided and adheres via heat and/or pressure tot he reinforcing structure, so providing a planar stiff composite article.

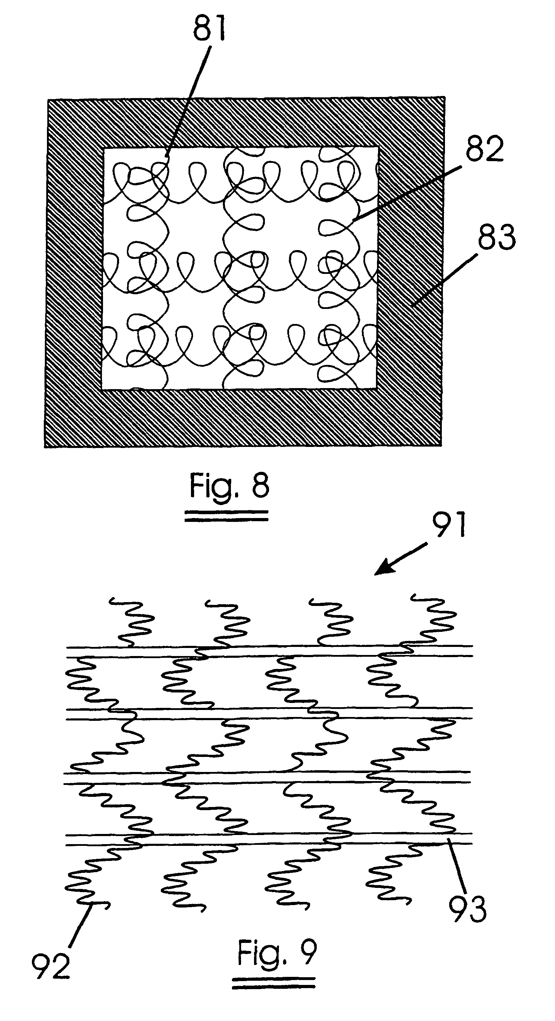

Another reinforcing structure having 2 reinforcing layers is shown in FIGURE 8. In the first reinforcing layer, spirally shaped wires 81 are laying essentially parallel to each other in one direction. In the second reinforcing layer spirally shaped wires 82 are laying essentially parallel to each other in a direction, which is different from the direction of the wires 81 of the first reinforcing layer. A polymer matrix 83 is additionally provided and adheres via heat and/or pressure to the reinforcing structure, so providing a planar stiff composite article.

Another reinforcing structure, being a textile woven fabric 91 is shown in FIGURE 9, comprising undulated wires as metallic element 92. Metallic elements 92 are present in warp or weft direction on the woven fabric, whereas the other direction of the woven fabric, being the weft respectively the warp, is provided using polymer filaments 93. These filaments may be made from the same or a different polymer as the polymer matrix of the stiff composite article. Alternatively, the polymer filament may be replaced by polymer tapes, having a width preferably in the range of 1 to 10 mm, and a thickness preferably between 20 and 300 µm. Alternatively, some polymer material can be present as coating on the metallic elements or on a number of metallic elements to form strips.
The total volume of the thermoplastic material present as filament and/or as coating may even be more than 40 % of the total volume of the woven fabric.
A reinforcing structure may comprise one or more reinforcing layers, each layer being such a textile fabric as described above.

For all embodiments, it was found that the adhesion between metallic element and polymer matrix could be influenced by a coating of the metallic element. For PA-matrices, a brass, zinc or zinc alloy coating on the metallic element can improve the adhesion between polymer matrix and metallic element. A possible zinc alloy is an alloy comprising 2 to 10% Al and 0.1 to 0.4% of a rare earth element such as La and/or Ce.

Further improvement for the adhesion can be obtained by applying adhesion promoters such as silane compounds, aluminates, zirconates or titanates.

It is clear that other embodiments are obtained by using other polymer matrices such as PE, PP, PS, PET, PEN, PBT, PVC, PA, PI, PC, SAN, ABS, TPU, TPO, thermoplastic copolyetheresters, copolymers of these polymers or similar materials. Each of the embodiments are influenced in a similar way as far as the coatings or the use of adhesion promoters is concerned.

A person known in the art understands that for all embodiments, the alloy type of the metal used, the diameters, section shapes and other physical properties of the wires, strands or cords will influence the strength of the metallic element.

It is clear that all metallic elements have an undulated structure, or have a rough structure, which improves the mechanical anchoring of the polymer material round the metallic element.

## Claims

1. A reinforcing structure, comprising one or more reinforcing layers, at least one of said reinforcing layers comprises metallic elements (41, 71, 72, 92), said metallic element are wires, bundles of wires, metallic strands or metallic cord, all of said metallic elements of said reinforcing layer are essentially parallel to each other, said metallic elements have one structural deformation, **characterized in that** said metallic elements have more than one undulation.

2. A reinforcing structure as in claim 1, wherein said undulations are comprised in one plane, parallel to the axis (44) of said metallic element (41).

3. A reinforcing structure as in claim 1, wherein said undulations are comprised in different planes, said planes are parallel to the axis (44) of said metallic element (41).

4. A reinforcing structure as in any one of the claims 1 to 3, wherein said metallic element (41, 71, 72, 92) comprises one or more metallic wires, said metallic wires have a diameter in the range of 0.04 to 1 mm.

5. A reinforcing structure as in any one of the claims 1 to 4 wherein said metallic element (41, 71, 72, 92) is a wire.

6. A reinforcing structure as in any one of the claims 1 to 4 wherein said metallic element (41, 71, 72, 92) is a cord.

7. A reinforcing structure as in any one of the claims 1 to 6, where said metallic element (41, 71, 72, 92) has an elongation at rupture of more than 3%.

8. A reinforcing structure as in any one of the claims 1 to 7, where said metallic element (41, 71, 72, 92) has an elongation of more than 0.3% at a force of 10% compared to the force at rupture of said metallic element (41, 71, 72, 92).

9. A reinforcing structure as in any one of the claims 1 to 8, said reinforcing layer which comprises said metallic elements is a textile woven fabric (91), consisting of a warp and a weft, said metallic elements (92) are present is either warp or weft.

10. A reinforcing structure as in any one of the claims 1 to 9, said metallic elements (41, 71, 72, 92) have a polymer coating.

## Patentansprüche

1. Eine verstärkende Struktur, die eine oder mehrere Verstärkungsschichten enthält, wobei mindestens eine von den vorgenannten Verstärkungsschichten Metallteile (41, 71, 72, 92) enthält, wobei diese vorgenannten Metallteile Drähte, Drahtbündel, metallische Strähnen oder Metallseile sind; all diese Metallteile in der vorgenannten Verstärkungsschicht liegen hauptsächlich parallel zueinander; die vorgenannten Metallteile haben eine strukturelle Deformation, **dadurch gekennzeichnet, dass** die vorgenannten Metallteile mehr als eine Wellenform aufweisen.

2. Eine verstärkende Struktur nach Anspruch 1, **dadurch gekennzeichnet, dass** die vorgenannten Wellenformen in einer einzigen Fläche, parallel zu der Achse (44) von dem vorgenannten Metallteil (41), enthalten sind.

3. Eine verstärkende Struktur nach Anspruch 1, in der die vorgenannten Wellenformen in unterschiedlichen Flächen enthalten sind, wobei die vorgenannten Flächen parallel zu der Achse (44) des vorgenannten Metallteils (41) liegen.

4. Eine verstärkende Struktur nach einem der Ansprüche 1 bis 3, in der das vorgenannte Metallteil (41, 71, 72, 92) einen oder mehrere Metalldrähte enthält, wobei die vorgenannten Metalldrähte einen Durchmesser im Bereich von 0,04 bis 1 mm haben.

5. Eine verstärkende Struktur nach einem der Ansprüche 1 bis 4, in der das vorgenannte Metallteil (41, 71, 72, 92) ein Draht ist.

6. Eine verstärkende Struktur nach einem der Ansprüche 1 bis 4, in der das vorgenannte Metallteil (41, 71, 72, 92) ein Drahtseil ist.

7. Eine verstärkende Struktur nach einem der Ansprüche 1 bis 6, in der das vorgenannte Metallteil (41, 71, 72, 92) eine Bruchdehnung von über 3% besitzt.

8. Eine verstärkende Struktur nach einem der Ansprüche 1 bis 7, in der das vorgenannte Metallteil (41, 71, 72, 92) bei einer Kraft, die 10% der Bruchkraft des vorgenannten Metallteils (41, 71, 72, 92) entspricht, eine Dehnung von über 0,3% besitzt.

9. Eine verstärkende Struktur nach einem der Ansprüche 1 bis 8, wobei die vorgenannte Verstärkungsschicht, die die vorgenannten Metallteile enthält, ein Textilgewebe (91) ist, das aus Kett- und Schussfäden besteht, wobei sich die vorgenannten Metallteile (92) entweder in der Kette oder im Schuss befinden.

10. Eine verstärkende Struktur nach einem der Ansprüche 1 bis 9, wobei die vorgenannten Metallteile (41, 71, 72, 92) Polymer beschichtet sind.

## Revendications

1. Une structure de renforcement, comprenant une ou plusieurs couches de renforcement, au moins une desdites couches de renforcement contenant des éléments métalliques (41, 71, 72, 92), lesdits éléments métalliques étant constitués par des fils, des faisceaux de fils, des torons métalliques ou un cordon métallique, tous lesdits éléments métalliques de ladite couche de renforcement étant essentiellement parallèles les uns par rapport aux autres, lesdits éléments métalliques présentant une déformation structurelle, **caractérisée en ce que** lesdits éléments métalliques présentent plus d'une ondulation.

2. Une structure de renforcement selon la revendication 1, dans laquelle lesdites ondulations se situent dans un même plan, parallèle à l'axe (44) dudit élément métallique (41).

3. Une structure de renforcement selon la revendication 1, dans laquelle lesdites ondulations se situent dans différents plans, lesdits plans étant parallèles à l'axe (44) dudit élément métallique (41).

4. Une structure de renforcement selon n'importe laquelle des revendications 1 à 3, dans laquelle ledit élément métallique (41, 71, 72, 92) comprend un ou plusieurs fils métalliques, lesdits fils métalliques ayant un diamètre de l'ordre de 0,04 à 1 mm.

5. Une structure de renforcement selon n'importe laquelle des revendications 1 à 4, dans laquelle ledit élément métallique (41, 71, 72, 92) est un fil.

6. Une structure de renforcement selon n'importe laquelle des revendications 1 à 4, dans laquelle ledit élément métallique (41, 71, 72, 92) est un cordon.

7. Une structure de renforcement selon n'importe laquelle des revendications 1 à 6 dans laquelle ledit élément métallique (41, 71, 72, 92) présente un allongement à la rupture de plus de 3 %.

8. Une structure de renforcement selon n'importe laquelle des revendications 1 à 7, dans laquelle ledit élément métallique (41, 71, 72, 92) présente un allongement de plus de 0,3 % lorsqu'il est soumis à une force de 10 % par rapport à la force de rupture dudit élément métallique (41, 71, 72, 92).

9. Une structure de renforcement selon n'importe laquelle des revendications 1 à 8, ladite couche de renforcement, qui comprend lesdits éléments métalliques, étant un tissu textile tissé (91), comprenant une trame et une chaîne, lesdits éléments métalliques (92) étant présents dans la trame et dans la chaîne.

10. Une structure de renforcement selon n'importe laquelle des revendications 1 à 9, dans laquelle lesdits éléments métalliques (41, 71, 72, 92) sont recouverts d'une couche de polymère.
